# FASCICULE DE BREVET EUROPEEN

(11) **EP 1 385 009 B1**
(45) Date de publication et mention de la délivrance du brevet: **08.12.2010**
(21) Numéro de dépôt: 03291719.7
(22) Date de dépôt: 10.07.2003
(51) Int. Cl.: G01P 15/10

(54) **Capteur inertiel compact**
Kompakter Inertialsensor
Compact inertial sensor

(30) Priorité: 26.07.2002 FR 0209496
(43) Date de publication de la demande: 28.01.2004
(73) Titulaire: Sagem Défense Sécurité, 75015 Paris (FR)
(72) Inventeur: Baudry, Hervé, 95290 L'Isle Adam (FR); Featonby, Paul, 91400 Orsay (FR); Le Roy, Jean-Claude, 95800 Cergy (FR)
(74) Mandataire: Lavialle, Bruno François Stéphane

(56) Documents cités:
- FR-A- 2 813 122
- US-A- 5 165 279
- US-A- 6 128 957
- US-B1- 6 393 913

## Description

La présente invention concerne les capteurs inertiels, notamment les accéléromètres.

L'invention concerne plus particulièrement les capteurs comprenant une cellule sensible comportant au moins un élément vibrant ayant une extrémité reliée à un élément support et une extrémité opposée reliée à une masse d'épreuve articulée à l'élément support par au moins deux éléments de liaison. L'élément vibrant est associé à des moyens d'excitation qui permettent de faire vibrer l'élément vibrant et de détecter la fréquence de vibration de celui-ci.

Lorsqu'un capteur de ce type est soumis à une accélération, la masse d'épreuve exerce une force sur l'élément vibrant. Cette force modifie la fréquence de vibration de telle manière que la variation de la fréquence de vibration de l'élément vibrant permet de déterminer l'accélération à laquelle le capteur est soumis.

Il est intéressant de disposer de cellules faiblement encombrantes. Ceci présente l'avantage de faciliter leur implantation dans les engins qu'elles sont destinées à équiper.

On connaît ainsi, notamment du document FR-A-2 739 190, des cellules réalisées sous la forme d'une plaque dans laquelle sont délimités par gravure l'élément vibrant, l'élément support, la masse d'épreuve et les éléments de liaison. Des cellules particulièrement compactes peuvent de cette façon être obtenues. Ceci permet en outre d'intégrer plusieurs cellules sur un même substrat en réalisant celles-ci simultanément de sorte que le coût de fabrication peut être relativement faible.

Toutefois, cette recherche d'un encombrement réduit est limitée par le fait que le dimensionnement de la masse d'épreuve influe sur la sensibilité du capteur, plus la masse d'épreuve étant lourde et plus la force exercée sur l'élément vibrant étant importante.

Pour réduire encore l'encombrement des cellules du type précité tout en conservant une masse d'épreuve suffisamment lourde, on a pensé à réaliser la cellule dans une plaque plus épaisse. Ceci rend cependant l'usinage de la plaque difficile. Dans ces cellules, l'augmentation de l'épaisseur se traduit également par une inclinaison de l'axe sensible de la cellule par rapport à une normale à la plaque, ce qui complique le montage de la cellule dans l'engin qu'elle est destinée à occuper. La position de l'axe sensible de la cellule dépend en outre des dispersions de fabrication.

Des cellules réalisées sous la forme d'une plaque sont également connues du document FR-A-2 813 122.

Le document US 6 128 957 A divulgue un capteur comportant une masse d'épreuve ayant une cavité dans laquelle sont logés un élément vibrant et une partie d'un élément support.

Un but de l'invention est de fournir un capteur ayant un encombrement réduit tout en ayant une sensibilité satisfaisante.

En vue de la réalisation de ce but, on prévoit, selon l'invention, un capteur inertiel comportant au moins un élément vibrant ayant une extrémité reliée à un élément support et une extrémité opposée reliée à une masse d'épreuve qui est articulée à l'élément support par au moins deux éléments de liaison et qui comporte une cavité dans laquelle sont logés l'élément vibrant et une partie de l'élément support adjacente à l'élément vibrant. Les éléments de liaison sont logés dans la cavité qui entoure une partie de l'élément support à laquelle les éléments de liaison sont rattachés.

Ainsi, il est possible d'obtenir une structure compacte tout en ayant une masse d'épreuve suffisamment lourde.

L'élément support comprend une cavité dans laquelle s'étend une partie de l'élément vibrant.

L'encombrement du capteur peut de la sorte encore être réduit.

Selon un mode de réalisation particulier, les éléments de liaison et l'élément vibrant sont agencés de manière que le capteur ait un axe sensible sensiblement perpendiculaire à un axe d'excitation d'un premier mode d'oscillation du capteur dans son ensemble.

Ainsi, il est possible d'empêcher que le premier mode d'oscillation du capteur dans son ensemble perturbe les mesures effectuées selon l'axe sensible du capteur.

Avantageusement, les éléments de liaison sont sensiblement perpendiculaires à l'élément vibrant et, de préférence, le capteur comprend deux paires d'éléments de liaison parallèles disposés en regard de part et d'autre de la partie de l'élément support à laquelle ils sont rattachés.

Ainsi, il est possible de réaliser un capteur plan ayant un axe sensible qui est contenu dans le plan du capteur et dont la position n'est que peu ou pas tributaire des dispersions de réalisation. En outre, il est aisé avec un tel capteur d'agencer les éléments de liaison pour qu'ils aient une raideur plus faible selon l'axe sensible que dans les autres directions. En l'espèce, les éléments de liaison travaillent en flexion pour les accélérations appliquées selon l'axe sensible tandis que l'élément vibrant travaille en traction-compression, ce qui permet un bon fonctionnement du capteur notamment à fréquence élevée. Le montage d'un tel capteur est particulièrement simple. Une telle structure permet de plus d'avoir des éléments de liaison qui s'étendent sur toute l'épaisseur de la plaque facilitant l'usinage de ces éléments. En outre, la fabrication du capteur est facilitée par le fait que la réalisation des éléments de liaison peut être rendue indépendante de celle de l'élément vibrant, ce qui permet éventuellement de décaler dans le temps la réalisation des éléments de liaison ou de scinder celle-ci en plusieurs opérations.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique de dessus d'un capteur d'accélération illustrant quelques aspects de la présente invention,
- la figure 2 est une vue analogue à la figure 1 d'un capteur d'accélération selon une variante du premier mode de réalisation,
- la figure 3 est une vue analogue à la figure 1 d'un capteur d'accélération selon l'invention.

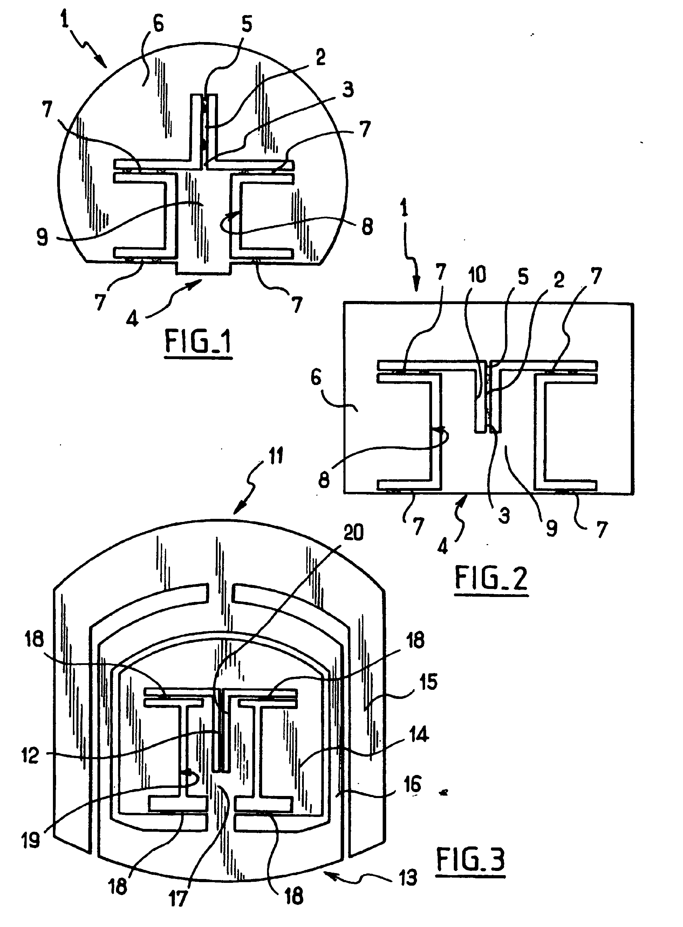

En référence à la figure 1, le capteur d'accélération selon le premier mode de réalisation comporte une plaque généralement désignée en 1 en quartz piézo-électrique dans laquelle sont délimités de manière connue en elle-même un élément vibrant 2 ayant une extrémité 3 reliée à un élément support 4 destiné à être fixé dans un boîtier et une extrémité 5 opposée reliée à une masse d'épreuve 6.

La masse d'épreuve 6 est articulée à l'élément support 4 par l'intermédiaire de deux paires d'éléments de liaison 7. Les éléments de liaison 7 sont ici formés par des pattes déformables qui sont formées dans la plaque 1 et s'étendent ici sur toute l'épaisseur de la plaque 1. Les éléments de liaison 7 sont perpendiculaires à l'élément vibrant 2 et les paires d'éléments de liaison 7 sont disposées en regard de part et d'autre de l'élément support 4. Les éléments de liaison 7 sont agencés pour favoriser un mouvement de translation de la masse d'épreuve 6 par rapport à l'élément support 4 dans le plan de la plaque 1. La direction sensible du capteur est donc contenue dans ce plan et est parallèle à l'élément vibrant 2. Les éléments de liaison 7 ont de préférence une raideur beaucoup plus faible parallèlement à l'axe sensible que selon les autres directions de manière que les accélérations selon l'axe sensible soient intégralement transmises à l'élément vibrant 2 tandis que les accélérations dans les autres directions ne sont, autant que possible, pas transmises à l'élément vibrant 2.

La masse d'épreuve 6 comprend une cavité 8 dans laquelle sont logés l'élément vibrant 2, les éléments de liaison 7 et une partie 9 de l'élément support 4 à laquelle l'élément vibrant 2 et les éléments de liaison 7 sont rattachés. Cet agencement permet d'avoir une structure compacte.

La partie 9 de l'élément support 4 ayant ici une forme parallélépipédique, la cavité 8 entoure la partie 9 sur trois côtés.

Le capteur comprend un circuit non représenté d'excitation piézo-électrique de l'élément vibrant 2 qui est agencé de façon connue en soi pour, d'une part, mettre en vibration l'élément vibrant 2 selon une fréquence déterminée et, d'autre part, détecter les variations de la fréquence de vibration de l'élément vibrant 2. Le circuit s'étend sur une face de la plaque 1 et comporte des bornes de liaison à un module électronique (non représenté) de commande du capteur. Le circuit peut être réalisé soit par dépôt localisé de métal sur la plaque 1, soit en recouvrant la face de la plaque 1 d'une couche métallique puis en attaquant ou gravant celle-ci pour former le circuit selon des techniques connues en elles-mêmes.

Le module de commande du capteur est agencé pour, d'une part commander le circuit d'excitation et traiter l'information relative à la fréquence de vibration de l'élément vibrant 2.

Selon la variante représentée à la figure 2, l'élément support 4 comprend une cavité 10 recevant l'élément vibrant 2 de telle manière que seule l'extrémité 5 de l'élément vibrant 2 fasse saillie dans la cavité 8 pour se rattacher à la masse d'épreuve 6. Cet agencement permet de réduire encore l'encombrement du capteur.

Les autres caractéristiques de cette variante sont identiques à celles du premier mode de réalisation.

En référence à la figure 3, le capteur d'accélération de l'invention comporte une plaque généralement désignée en 11 en quartz piézo-électrique dans laquelle sont délimités un élément vibrant 12 ayant une extrémité reliée à un élément support généralement désigné 13 et une extrémité opposée reliée à une masse d'épreuve 14. L'élément support 13 comprend une partie formant socle 15 destinée à être fixée dans un boîtier, un cadre de découplage 16 ayant un côté solidaire de la partie formant socle 15 et un côté opposé relié à une partie massive 17. La masse d'épreuve 14 est reliée à la partie massive 17 par l'élément vibrant 12 et des éléments de liaison 18 qui sont constituées par des pattes déformables formées dans la plaque 11 et qui sont perpendiculaires à l'élément vibrant 12. Les éléments de liaison 18 sont agencés pour favoriser un mouvement de translation de la masse d'épreuve 14 par rapport à l'élément support 13 de telle sorte que la direction sensible du capteur soit contenu dans le plan de la plaque 11.

La masse d'épreuve 14 comprend une cavité 19 dans laquelle sont logés l'élément vibrant 12, les éléments de liaison 18 et la partie massive 17 à laquelle l'élément vibrant 12 et les éléments de liaison 18 sont rattachés.

La partie massive 17 comprend une cavité 20 recevant l'élément vibrant 12 de telle manière que seule l'extrémité de l'élément vibrant 12 rattachée à la masse d'épreuve 14 fasse saillie dans la cavité 19.

Le capteur comprend comme dans l'exemple de la figure 1 un circuit non représenté d'excitation piézo-électrique de l'élément vibrant 12 et un module de commande du capteur agencé pour, d'une part commander le circuit d'excitation et traiter l'information relative à la fréquence de vibration de l'élément vibrant 12.

Dans tous les cas, le capteur est de préférence agencé de façon connue en elle-même pour que le capteur ait un premier mode d'oscillation de structure (qui concerne l'ensemble de la plaque 1 par opposition au mode de vibration de l'élément vibrant qui ne concerne sensiblement que ce dernier et est utilisé pour les mesures) ayant une fréquence d'excitation supérieure à la plage de fréquences nécessaire à la mesure des accélérations de telle manière que ce mode parasite d'oscillation de structure ne vienne pas perturber les mesures. Habituellement, la fréquence d'excitation du mode d'oscillation de structure est repoussée au-delà de 3000 Hz. De préférence, le première mode d'excitation a également une direction d'excitation orthogonale à l'axe sensible.

Bien entendu, l'invention n'est pas limitée au mode de réalisation décrit et on peut y apporter des variantes de réalisation sans sortir du cadre de l'invention tel que défini par les revendications.

En particulier, l'invention s'applique à tous les capteurs à élément vibrant. Ainsi, bien que le capteur décrit soit réalisé à partir d'une plaque de quartz et mette en oeuvre l'effet piézo-électrique, le capteur peut être réalisé à partir d'une plaque de silicium dont l'élément vibrant est excité de façon capacitive, magnétique, thermoélectrique ou autre. Le mode de fabrication d'un tel capteur est analogue à celui décrit ci-dessus.

De même, bien que l'invention ait été décrite selon un mode de réalisation dans lequel le capteur comprend un seul élément vibrant, l'invention s'applique également aux capteurs ayant plusieurs éléments vibrants et notamment des éléments vibrants associés pour former un diapason.

Bien que dans les modes de réalisation décrits, le capteur comprennent deux paires d'éléments de liaison agencés pour favoriser une translation de la masse d'épreuve par rapport à l'élément support dans le plan du capteur, le capteur peut comprendre un nombre différent d'éléments de liaison et par exemple deux éléments de liaison agencés pour favoriser une translation ou un pivotement de la masse d'épreuve par rapport à l'élément support.

L'élément support et la masse d'épreuve peuvent également avoir d'autres formes que celles représentées.

## Revendications

1. Capteur inertiel comportant au moins un élément vibrant (2 ; 12) ayant une extrémité (3) reliée à un élément support (4 ; 13) et une extrémité opposée (5) reliée à une masse d'épreuve (6 ; 14) qui est articulée à l'élément support par au moins deux éléments de liaison (7 ; 18) et qui comporte une cavité (8 ; 19) dans laquelle sont logés l'élément vibrant et une partie de l'élément support adjacente à l'élément vibrant, et ayant les éléments de liaison logés dans la cavité qui entoure une partie (9 ; 17) de l'élément support à laquelle les éléments de liaison sont rattachés **caractérisé en ce que** l'élément support (13) comprend une partie formant un socle (15), un cadre de découplage (16) et une partie (17) à laquelle l'élément vibrant (12) est rattaché, où le cadre de découplage (16) a un côté solidaire de la partie formant le socle (15) et un côté opposé relié à la partie massive (17).

2. Capteur selon la revendication 1, **caractérisé en ce que** l'élément support (2 ; 13) comprend une cavité (10, 20) dans laquelle s'étend une partie de l'élément vibrant (2 ; 12).

3. Capteur selon la revendication 1, **caractérisé en ce que** les éléments de liaison (7 ; 18) et l'élément vibrant (2 ; 12) sont agencés de manière que le capteur ait un axe sensible sensiblement perpendiculaire à un axe d'excitation d'un premier mode d'oscillation du capteur dans son ensemble.

4. Capteur selon la revendication 3, **caractérisé en ce que** les éléments de liaison (7 ; 18) sont sensiblement perpendiculaires à l'élément vibrant (2 ; 12).

5. Capteur selon la revendication 1, **caractérisé en ce qu'**il comprend deux paires d'éléments de liaison (7 ; 18) parallèles disposés en regard de part et d'autre de la partie (9 ; 17) de l'élément support (4 ; 13) à laquelle ils sont rattachés.

6. Capteur selon la revendication 1, **caractérisé en ce qu'**il comprend une plaque (1 ; 11) dans laquelle sont délimités l'élément vibrant (2 ; 12), l'élément support (4 ; 13), la masse d'épreuve (6 ; 14) et les éléments de liaison (7 ; 18).

## Claims

1. An inertial sensor comprising at least one vibrating element (2; 12) having one end (3) connected to a support element (4; 13) and an opposite end (5) connected to a test mass (6; 14) which is hinged to the support element by at least two link elements (7; 18) and which includes a cavity (8; 19) in which the vibrating element and a portion of the support element adjacent to the vibrating element are received, and having the link elements housed in the cavity surrounding a portion (9; 17) of the support element to which the link elements are connected, **characterized in that** the support element (13) includes a yoke-forming portion (15), a decoupling frame (16), and a portion (17) of the support element (13) to which the vibrating element (12) is connected, wherein the decoupling frame (16) has a side solid with the yoke-forming portion (15) and an opposite side connected to the massive portion (17).

2. A sensor according to claim 1, **characterized in that** the support element (2; 13) includes a cavity (10, 20) in which there extends a portion of the vibrating element (2; 12).

3. A sensor according to claim 1, **characterized in that** the link elements (7; 18) and the vibrating element (2; 12) are arranged in such a manner that the sensor has a sensing axis substantially perpendicular to an excitation axis for a first mode of oscillation of the sensor as a whole.

4. A sensor according to claim 3, **characterized in that** the link elements (7; 18) are substantially perpendicular to the vibrating element (2; 12).

5. A sensor according to claim 1, **characterized in that** it has two parallel pairs of link elements (7; 18) disposed facing each other on opposite sides of the portion (9; 17) of the support element (4; 13) to which they are connected.

6. A sensor according to claim 1, **characterized in that** it comprises a plate (1; 11) in which there are defined the vibrating element (2; 12), the support element (4; 13), the test mass (6; 14), and the link elements (7; 18).

## Patentansprüche

1. Inertialsensor, umfassend mindestens ein Schwingelement (2; 12), das ein Ende (3) hat, das mit einem Halteelement (4; 13) verbunden ist, sowie ein entgegengesetztes Ende (5), das mit einer Prüfmasse (6; 14) verbunden ist, die an dem Halteelement über mindestens zwei Verbindungselemente (7; 18) angelenkt ist und die einen Hohlraum (8; 19) umfasst, in dem das Schwingelement und ein an das Schwingelement angrenzender Abschnitt des Halteelements untergebracht sind, wobei die Verbindungselemente in dem Hohlraum untergebracht sind, der einen Abschnitt (9; 17) des Halteelements umgibt, an dem die Verbindungselemente befestigt sind, **dadurch gekennzeichnet, dass** das Halteelement (13) einen einen Sockel (15) bildenden Abschnitt, einen Entkopplungsrahmen (16) und einen Abschnitt (17) umfasst, an dem das Schwingelement (12) befestigt ist, wobei der Entkopplungsrahmen (16) eine Seite hat, die fest mit dem den Sockel (15) bildenden Abschnitt verbunden ist, sowie eine entgegengesetzte Seite, die mit dem massiven Abschnitt (17) verbunden ist.

2. Sensor nach Anspruch 1, **dadurch gekennzeichnet, dass** das Halteelement (2; 13) einen Hohlraum (10, 20) umfasst, in dem sich ein Abschnitt des Schwingelements (2; 12) erstreckt.

3. Sensor nach Anspruch 1, **dadurch gekennzeichnet, dass** die Verbindungselemente (7; 18) und das Schwingelement (2; 12) derart ausgebildet sind, dass der Sensor eine sensitive Achse hat, die im Wesentlichen senkrecht zu einer Anregungsachse zur Anregung eines ersten Schwingungsmodus des Sensors in seiner Gesamtheit steht.

4. Sensor nach Anspruch 3, **dadurch gekennzeichnet, dass** die Verbindungselemente (7; 18) im Wesentlichen senkrecht zum Schwingelement (2; 12) sind.

5. Sensor nach Anspruch 1, **dadurch gekennzeichnet, dass** er zwei Paare von parallelen Verbindungselementen (7; 18) umfasst, die einander gegenüberliegend zu beiden Seiten desjenigen Abschnitts (9; 17) des Halteelements (4; 13) angeordnet sind, an dem sie befestigt sind.

6. Sensor nach Anspruch 1, **dadurch gekennzeichnet, dass** er eine Platte (1; 11) umfasst, in der das Schwingelement (2; 12), das Halteelement (4; 13), die Prüfmasse (6; 14) und die Verbindungselemente (7; 18) abgegrenzt sind.
